# EUROPEAN PATENT APPLICATION

(11) **EP 4 836 382 A1**
(43) Date of publication of application: **04.11.2026**
(21) Application number: 24928676.6
(22) Date of filing: 16.07.2024
(51) Int. Cl.: H04L 67/12, H02S 50/00, H02S 40/32, H04L 67/303, G06F 3/041, H04L 67/14

(54) **METHOD AND SYSTEM FOR CONTROLLING INFORMATION TRANSMISSION AND RECEPTION OF AC MODULE INCLUDING PV PANEL**

(30) Priority: 04.03.2024 KR 20240030698
(71) Applicant: Hanwha Solutions Corporation, Jung-gu Seoul 04541 (KR)
(72) Inventor: KOO, Kyoung Mo, Seoul 04541 (KR)
(74) Representative: Mooser, Sebastian Thomas
(86) International application number: PCT/KR2024/010131
(87) International publication number: WO 2025/187877

(57) **Abstract**

An embodiment of the present disclosure discloses a method of controlling transmission and reception of information of an alternating-current (AC) module including a photovoltaic (PV) panel, the method including: receiving first information from an AC combiner to which at least one AC module including a PV panel and a microinverter is connected; performing control such that, based on the first information being received, information inducing user's input is output on a display of a user terminal; performing control such that, based on an input corresponding to the information inducing user's input output on the user terminal being received, transmission control information for controlling the microinverter of the AC module to transmit second information to the AC combiner, is transmitted to the AC combiner; performing control such that the second information collected in the AC combiner is transmitted to a cloud server; and receiving third information corresponding to the second information from the cloud server, and performing control such that the third information is output on the display.

## Description

### Technical Field

The present disclosure relates to a method of controlling transmission and reception of information, and more particularly, to a method of controlling an alternating-current (AC) module including a photovoltaic (PV) panel for solar power generation to transmit and receive various types of information, and a system for implementing the method.

### Background Art

Solar power generation is a highly regarded technology for environmentally friendly energy production. Solar power generation is a method of producing electricity with minimal pollution, but its efficiency is not as high as traditional power generation methods due to the nonuniform incidence of sunlight on the ground caused by climate, weather, or various meteorological anomalies.

The key to solar power generation techniques lies in how to collect and transmit, without loss, electricity generated by solar power generation elements, which are referred to as photovoltaic (PV) panels or solar panels, and in order to maximize the low efficiency of power generation, it is important to enhance the efficiency of communication between various modules that serve as main components of power generation.

Meanwhile, power generated by a PV panel is converted and transmitted by a microinverter attached to the PV panel, and because the technology required to mass-produce PV panels differs from the technology required to mass-produce microinverters, manufacturers tend to specialize in either producing PV panels or microinverters. However, in a case in which a PV panel and a microinverter are produced by different manufacturers, compatibility issues may arise, and thus, a user faces the inconvenience of having to, after combining the PV panel with the microinverter, manually input information about a PV module, which includes the PV panel, into an installer application running on a terminal. In addition, when the user makes a mistake while inputting information about the PV panel into the terminal, the PV panel may not be properly recognized.

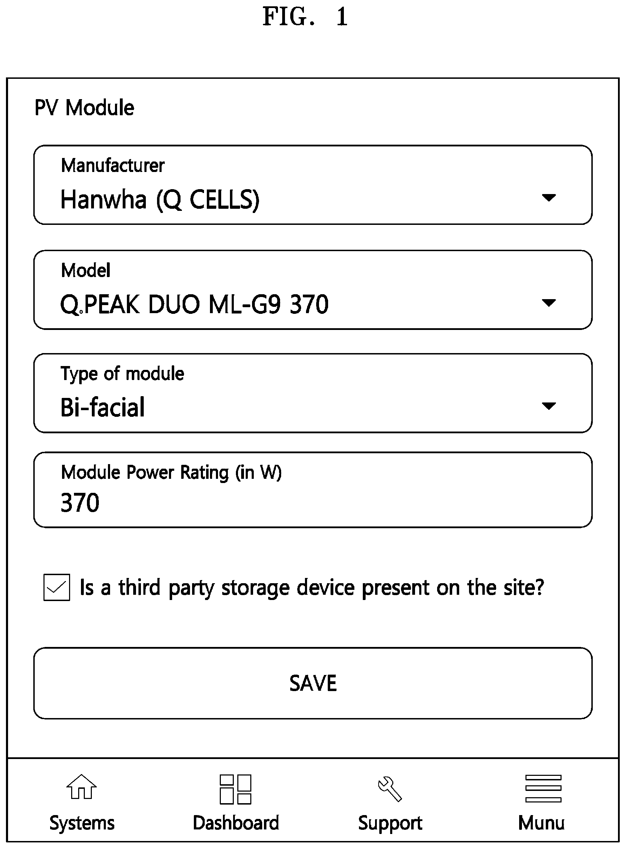

FIG. 1 is a diagram schematically illustrating an example of inputting information about a PV panel through a user terminal in a process of installing the PV module.

FIG. 1 illustrates that a PV panel and a microinverter are produced by different manufacturers and then combined with each other, and an installer is executed on a user terminal, according to the related art, and referring to FIG. 1, it may be seen that a user needs to manually input, through the installer, the manufacturer of a PV module, the model name of the PV module, the type of the PV module, and power information of the PV module. The omission and automation of the process illustrated in FIG. 1 may increase user convenience and minimize human errors in a data input process as described above, highlighting the need for such technology.

### Disclosure

### Technical Problem

The present disclosure provides a method of controlling transmission and reception of information of an alternating-current (AC) module including a photovoltaic (PV) panel, and a system for implementing the method.

### Technical Solution

According to an embodiment of the present disclosure, a method of controlling transmission and reception of information of an alternating-current (AC) module including a photovoltaic (PV) panel includes: receiving first information from an AC combiner to which at least one AC module including a PV panel and a microinverter is connected; performing control such that, based on the first information being received, information inducing user's input is output on a display of a user terminal; performing control such that, based on an input corresponding to the information inducing user's input output on the user terminal being received, transmission control information for controlling the microinverter of the AC module to transmit second information to the AC combiner, is transmitted to the AC combiner; performing control such that the second information collected in the AC combiner is transmitted to a cloud server; and receiving third information corresponding to the second information from the cloud server, and performing control such that the third information is output on the display.

According to another embodiment of the present disclosure, a system for controlling transmission and reception of information of an AC module including a PV panel includes an AC combiner, a cloud server and a user terminal, wherein the AC combiner is configured to generate first information based on detecting that at least one AC module including a PV panel and a microinverter is connected to the AC combiner, receive second information from the microinverter of the AC module through a control signal from the user terminal that has received the generated first information, and transmit the second information to the cloud server, the cloud server is configured to generate third information corresponding to the second information and transmit the third information to the user terminal, and the user terminal is configured to, in response to receiving the generated first information, generate the control signal and transmit the control signal to the AC combiner, and output, through a display, the generated third information from the cloud server.

### Advantageous Effects

According to the present disclosure, it is convenient for a user not to have to manually input information about a photovoltaic (PV) panel.

In addition, according to the present disclosure, human errors may be prevented by automating a process that requires a user to manually input information, and the time required to install a PV panel may be shortened compared to the related-art methods.

### Description of Drawings

FIG. 1 is a diagram schematically illustrating an example of inputting information about a photovoltaic (PV) panel through a user terminal in a process of installing the PV module.
FIG. 2 is a diagram schematically illustrating an entire system for implementing a method according to the present disclosure.
FIG. 3 is a diagram schematically illustrating a user terminal and a management app for the user terminal, according to an embodiment of the present disclosure.
FIG. 4 is a flowchart of an example of a method according to the present disclosure.
FIG. 5 is a diagram illustrating an example of information about an alternating-current (AC) module that is output on a display of a user terminal when the present disclosure is applied.
FIG. 6 is a diagram illustrating an example of total power production information of AC modules that is output on a display of a user terminal when the present disclosure is applied.

### Best Mode

According to an embodiment of the present disclosure, a method of controlling transmission and reception of information of an alternating-current (AC) module including a photovoltaic (PV) panel includes: receiving first information from an AC combiner to which at least one AC module including a PV panel and a microinverter is connected; performing control such that, based on the first information being received, information inducing user's input is output on a display of a user terminal; performing control such that, based on an input corresponding to the information inducing user's input output on the user terminal being received, transmission control information for controlling the microinverter of the AC module to transmit second information to the AC combiner, is transmitted to the AC combiner; performing control such that the second information collected in the AC combiner is transmitted to a cloud server; and receiving third information corresponding to the second information from the cloud server, and performing control such that the third information is output on the display.

In the method, the first information may be confirmation information generated when the AC module and the AC combiner are electrically connected to each other.

In the method, the information inducing user's input may be a smart button that is output through the display of the user terminal, and the input corresponding to the information inducing user's input may be a touch input on the smart button.

In the method, the second information may be identification information of the microinverter.

In the method, the third information may include identification information of the microinverter, identification information of the PV panel, and power production information of the PV panel.

In the method, the performing of the control such that the second information is transmitted to the cloud server may include performing control such that, based on a preset number of the AC modules being connected to the AC combiner, and the second information being accumulated for each connected AC module, the accumulated second information is transmitted to the cloud server.

In the method, the performing of the control such that the second information is transmitted to the cloud server may include performing control such that the AC combiner checks the received second information at preset intervals, and collectively transmits the second information to the cloud server.

In the method, the performing of the control such that the second information is transmitted to the cloud server may include performing control such that connection information for connecting to the cloud server is transmitted to the AC combiner based on information input to the user terminal.

According to another embodiment of the present disclosure, a system for controlling transmission and reception of information of an AC module including a PV panel includes an AC combiner, a cloud server and a user terminal, wherein the AC combiner is configured to generate first information based on detecting that at least one AC module including a PV panel and a microinverter is connected to the AC combiner, receive second information from the microinverter of the AC module through a control signal from the user terminal that has received the generated first information, and transmit the second information to the cloud server, the cloud server is configured to generate third information corresponding to the second information and transmit the third information to the user terminal, and the user terminal is configured to, in response to receiving the generated first information, generate the control signal and transmit the control signal to the AC combiner, and output, through a display, the generated third information from the cloud server.

In the system, the first information may be confirmation information generated when the AC module and the AC combiner are electrically connected to each other.

In the system, the user terminal may be further configured to perform control such that, based on the first information being received, information inducing user's input is output on the display of the user terminal, the information inducing user's input may be a smart button that is output through the display of the user terminal, and the input corresponding to the information inducing user's input is a touch input on the smart button.

In the system, the second information may be identification information of the microinverter.

In the system, the third information may include identification information of the microinverter, identification information of the PV panel, and power consumption information of the PV panel.

In the system, the user terminal may be further configured to perform control such that, based on a preset number of the AC modules being connected to the AC combiner, and the second information being accumulated for each connected AC module, the accumulated second information is transmitted to the cloud server.

In the system, the user terminal may be further configured to perform control such that the AC combiner checks the received second information at preset intervals, and collectively transmits the second information to the cloud server.

In the system, the user terminal may be further configured to perform control such that connection information for connecting to the cloud server is transmitted to the AC combiner based on information input to the user terminal.

According to an embodiment, there may be provided a computer-readable recording medium having recorded thereon a program for executing the method.

### Embodiments of Invention

As the present disclosure allows for various changes and numerous embodiments, particular embodiments will be illustrated in the drawings and described in detail. The effects and features of the present disclosure and methods of achieving them will become clear with reference to the embodiments described in detail below with the drawings. However, the present disclosure is not limited to the embodiments disclosed below, and may be implemented in various forms.

Hereinafter, embodiments of the present disclosure will be described in detail with reference to the accompanying drawings, and the same or corresponding components will be denoted by the same reference numerals when described with reference to the accompanying drawings, and thus, their descriptions that are already provided will be omitted.

In the following embodiments, terms such as "first," "second," etc., are used only to distinguish one component from another, and such components must not be limited by these terms.

In the following embodiments, the singular expression also includes the plural meaning as long as it is not inconsistent with the context.

In the following embodiments, the terms "comprises," "includes," "has", and the like used herein specify the presence of stated features or components, but do not preclude the presence or addition of one or more other features or components.

When a certain embodiment may be differently implemented, particular operations may be performed differently from the sequence described herein. For example, two processes, which are successively described herein, may be substantially simultaneously performed, or may be performed in a process sequence opposite to a described process sequence.

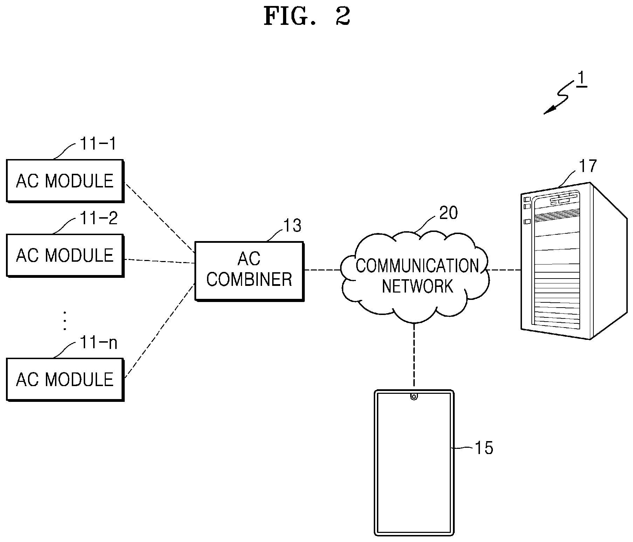

FIG. 2 is a diagram schematically illustrating an entire system for implementing a method according to the present disclosure.

Referring to FIG. 2, it may be seen that, in an entire system 1 according to an embodiment of the present disclosure, an alternating-current (AC) combiner 13, a user terminal 15, and a cloud server 17 are connected to each other through a communication network 20. In addition, although not illustrated in FIG. 2, the AC combiner 13 is connected to one or more AC modules 11-1, 11-2, ..., 11-n through various wired or wireless communication networks. For example, the AC modules and AC combiner 13 may communicate with each other through programmable logic controller (PLC) communication.

First, in the present disclosure, the AC module refers to a module that physically includes a photovoltaic (PV) panel and a microinverter. For the sake of clarity in the drawings, it is assumed that the representation of the PV panel and microinverter included in each AC module is omitted in FIG. 2. In addition, the PV panel is capable of converting incident sunlight into direct-current power, and in the present disclosure, the PV panel is considered in a broad sense to further include a separate angle adjustment mechanism to enhance light collection efficiency. The microinverter may be electrically connected to the PV panel to convert the direct-current power converted by the PV panel into alternating-current power.

In the present disclosure, the PV panel and the microconverter are referred to as an AC module that is a single unit. As illustrated in FIG. 2, at least one AC module may be provided, and one or more AC modules 11-1, 11-2, ..., 11-n may be electrically connected to the AC combiner 13 through cables, and may communicate with the AC combiner 13. In FIG. 2, the number of AC modules is limited to n, but the number of AC modules is not limited to a particular number in the present disclosure, and thus, the number of AC modules may be less or more than n according to an embodiment.

In the present disclosure, the serial number of the PV panel and the serial number of the microinverter may be each determined and managed as a pair. That is, after the serial numbers of the PV panel and the microinverter corresponding to the PV panel are each determined during a production process of the AC module, the determined pair of serial numbers may be finally stored and managed in the cloud server 17 via a certain terminal through manual input by a user or automatic input by a module production machine.

The AC combiner 13 may perform a function of receiving and storing alternating-current power generated from the one or more AC modules, or a function of communicating with the AC module 11-1 through various types of communication. That is, the AC combiner 13 functions as a combiner for collecting and combining information transmitted from a plurality of AC modules 11-1, 11-3, ... 11-n, and as will be described below, may operate to receive a control signal from the user terminal 15, and transmit or receive certain information according to the received control signal.

The user terminal 15 is a terminal used by a user, and refers to an electronic device equipped with a communication module capable of communicating with the AC combiner 13 and the cloud server 17. The user terminal 15 refers to a smart device including an input device for receiving an input from the user, an output device (e.g., a display) for visually outputting an input to the user terminal or a result of processing by the user terminal, and a communication module capable of communicating with an external device, and thus, the size or type of the user terminal 15 is not limited as long as it includes the input device, the output device, and the communication module. For example, although FIG. 2 illustrates the user terminal 15 as a smart phone, the user terminal 15 may be a personal computer (PC), a notebook computer, a netbook, or the like capable of communicating with the AC combiner 13 and the cloud server 17.

The cloud server 17 refers to a server capable of selectively performing communication with an external device attempting to access the cloud server 17 through the communication network 20, based on approved access information. The cloud server 17 is a device capable of quickly and accurately performing computation required to implement a method according to the present disclosure, and, according to an embodiment, may physically or logically include an artificial intelligence (AI) model for accurately performing the required computation.

The communication network 20 performs a function of electrically connecting the AC combiner 13, the user terminal 15, and the cloud server 17, which are components of the entire system 1 illustrated in FIG. 2, and may include various wired and wireless communication networks such as a data network, a mobile communication network, or the Internet. In particular, in the present disclosure, the communication network 170 includes not only mobile communication networks currently in use, but also old-generation deprecated mobile communication networks, and thus may be any one of a Global System for Mobile communications (GSM) network, a code-division multiple access (CDMA) network, a wideband CDMA (WCDMA) network, a CDMA2000 network, a Long-Term Evolution (LTE) network, an LTE-Advanced (LTE-A) network, a 5th Generation (5G) network, and a 6th Generation (6G) mobile communication network expected to be serviced in 2030.

The communication network 20 is a network implemented by an Internet service provider (ISP), but may be implemented by an ISP base station server and communication cables for physically and logically implementing the communication network 20 although omitted in the entire system 1 of FIG. 2. However, in a process of initiating communication between the AC combiner 13 and the user terminal 15, the communication counterpart may be identified and recognized through short-range communication between the AC combiner 13 and the user terminal 15, and in this case, the communication network 20 may be a concept that temporarily restricts a wide-area communication network provided by the ISP.

Hereinafter, an embodiment of the present disclosure implemented by data transmission and reception of each component of the entire system 1 will be described in detail.

First, when the AC module 11-1 including a PV panel and a microinverter is connected to the AC combiner 13, the user terminal 15 may communicate with the AC combiner 13 to receive first information from the AC combiner 13. Here, the first information is a type of confirmation information generated when the AC module 11-1 and the AC combiner 13 are electrically connected to each other, and is regarded as information that is transmitted from the AC combiner 13 to the user terminal when the AC combiner 13 and the user terminal 15 are enabled to communicate with each other after a connection unit of the AC module 11-1 and a connection unit of the AC combiner 13 engage with each other. The user may recognize that at least one AC module is connected to the AC combiner 13, through the user terminal 15 that has received the first information.

Next, when the first information is transmitted from the AC combiner 13, an app installed on the user terminal 15 may, based on the first information being received, control the display of the user terminal 15 to output information inducing user's input. Here, the information inducing user's input refers to information that induces the user to confirm particular information and to accordingly perform a subsequent input through the user terminal 15, and may mainly be visual information, but is not limited thereto, and may be auditory or tactile (vibration) information. For example, the information inducing user's input may be a smart button that is output through the display of the user terminal 15, and an input corresponding to the information inducing user's input may be a touch input on the smart button.

When the user makes an input corresponding to the information inducing user's input through the user terminal 15, the AC module 11-1 and the AC combiner 13 are connected to each other not only in terms of hardware but also in terms of software, to operate normally. That is, the input corresponding to the information inducing user's input may be understood as a concept of approval for the AC module 11-1 that is most recently connected to the AC combiner 13.

When an input corresponding to the information inducing user's input is input to the user terminal 15, the AC combiner 13 may cause second information to be transmitted from the microinverter included in the AC module 11-1 to the AC combiner 13. That is, the AC combiner 13 may receive, from the user terminal 15, information that an input corresponding to the information inducing user's input has been input, and then request the AC module 11-1 to transmit the second information from the AC module 11-1.

Here, the second information transmitted from the AC module 11-1 to the AC combiner 13 is identification information of the microinverter, and is a broad concept including the serial number described above. That is, the identification information of the microinverter may be the serial number or a string containing various alphabets and symbols (or a model name composed of a string).

The app installed on the user terminal 15 may perform control such that, when the AC combiner 13 receives the second information from the AC module 11-1, the second information received by the AC combiner 13 is transmitted to the cloud server 17. In more detail, in a case in which the AC combiner 13 is not set up in advance by the user terminal 15 for communication with the cloud server 17, the AC combiner 13 is unable to communicate with the cloud server 17, however, after receiving a key, login information, or the like for accessing the cloud server 17 through various settings processed by an app installed on the user terminal 15, such as an installer, the AC combiner 13 is able to freely communicate with the cloud server 17 through the communication network 20. As described above, when a user makes an input on a smart button that is output through the display of the user terminal 15, communication between the AC combiner 13 and the cloud server 17 may be initiated, and there may be various other methods. In addition, a communication channel established between the AC combiner 13 and the cloud server 17 remains valid until it is separately terminated.

After receiving the second information from the AC combiner 13, the cloud server 17 may search a database (not shown) of the cloud server 17 to obtain identification information of the PV panel included in the AC module 11-1, identification information of the microinverter, and power production information of the PV panel, and transmit the obtained identification information of the PV panel, identification information of the microinverter, and power production information of the PV panel, to the user terminal 15 through the communication network 20. The identification information of the PV panel, the identification information of the microinverter, and the power production information of the PV panel are concepts corresponding to the first information and the second information described above, and may be collectively referred to as third information.

In an embodiment, the user terminal 15 may control the AC combiner 13 to, when a preset number of AC modules are connected to the AC combiner 13, and the second information is accumulated for each connected AC module, to transmit the accumulated second information to the cloud server 17. In more detail, when the user specifies, through the app installed on the user terminal (15), the number of pieces of second information to be accumulated in the AC combiner 13, the AC combiner 13 transmits the accumulated pieces of second information to the cloud server 17 only when the specified number of pieces of second information have been accumulated. For example, when the user has input an accumulation limit number of pieces of second information to the user terminal 15, then five AC modules are connected to the AC combiner 13, and second information is accumulated for each of the five AC modules, the second information for the five AC modules may be transmitted to the cloud server 17. According to the present embodiment, the number of times data is transmitted and received between the AC combiner 13 and the cloud server 17 is significantly reduced, which is advantageous in terms of resource management of the AC combiner 13 and the cloud server 17.

In another embodiment, the user terminal 15 may control the AC combiner 13 to check received second information at preset intervals, and collectively transmit the checked second information to the cloud server 17. In more detail, when the user sets an interval for checking second information for the AC combiner 13 through the app installed on the user terminal 15, the AC combiner 13 checks second information at the set intervals, and transmits the second information to the cloud server 17. For example, when the interval for checking second information is set to 10 minutes, the AC combiner 13 checks, every 10 minutes, whether there is updated second information, and transmits the updated second information to the cloud server 17. According to the present embodiment, the interval at which the cloud server 17 checks second information and transmits third information corresponding to the second information to the user terminal 15 is fixed, and thus, predictability may be secured and consistency in data management may be achieved.

In yet another embodiment, connection information for connecting to the cloud server 17 may be transmitted to the AC combiner 13 based on information input to the user terminal 15. Here, the connection information refers to information for activating a communication channel between the AC combiner 13 and the cloud server 17, and once a communication channel between the AC combiner 13 and the cloud server 17 is established by the user on a one-time basis, communication between the AC combiner 13 and the cloud server 17 may remain enabled thereafter without a separate command.

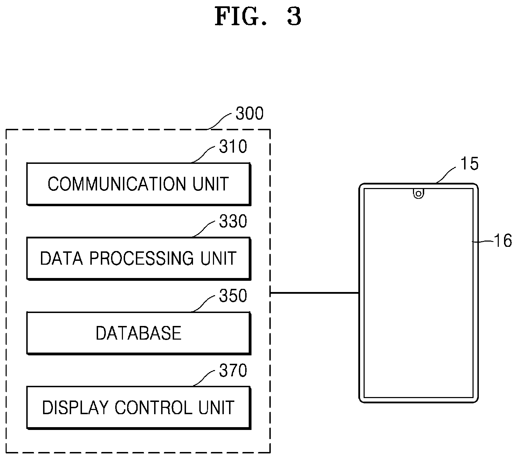

FIG. 3 is a diagram schematically illustrating a user terminal and a management app for the user terminal, according to an embodiment of the present disclosure.

Hereinafter, descriptions will be provided with reference to FIG. 2.

In FIG. 3, the user terminal 15 illustrated together with a management app 300 refers to an electronic device equipped with a display 16 to display visual data, and an interface unit (not shown) to receive data from a user. Although FIG. 3 illustrates the user terminal 15 as a smart phone, the user terminal 15 in an implementation of the present disclosure is not limited to a smart phone, and may include a portable terminal such as a tablet PC or a netbook.

The management app 300 of FIG. 3 is not a physical device, but rather a logical device representing an intangible application installed on the user terminal 15, and is illustrated as being included in the user terminal 15 in FIG. 3, but when the management app 300 is actually implemented on the user terminal 15, it may be implemented in a form in which a collection of scripts composed of various instructions are integrated into an executable program and then installed on the user terminal 15. That is, the management app 300 operates to control content displayed on the display 16 of the user terminal 15.

FIG. 3 illustrates only components of the management app 300 that highlight features of an embodiment of the present disclosure. Thus, those of skill in the art may understand that, according to an embodiment other than the embodiment illustrated in FIG. 3, other general-purpose components may be further included in addition to the components illustrated in FIG. 3.

Referring to FIG. 3, it may be seen that the management app 300 includes a communication unit 310, a data processing unit 330, a database 350, and a display control unit 370.

The communication unit 310 may control communication with an external device. In detail, the communication unit 310 may be understood as a logical module for the user terminal 15 to communicate with the AC combiner 13 and the cloud server 17 through the communication network 20 of FIG. 2. The communication unit 310 may perform a function of receiving first information from the AC combiner 13 and transmitting the first information to the data processing unit 330, a function of transmitting, to the AC combiner 13, connection information for establishing a communication channel between the AC combiner 13 and the cloud server 17, or a function of receiving third information from the cloud server 17 and transmitting the third information to the data processing unit 330. That is, the communication unit 241 may control a physical communication module of the user terminal 15 to operate in a limited manner according to a predefined command.

The data processing unit 330 may process an overall process required to implement a method according to the present disclosure. The data processing unit 330 is a logical implementation (with scripts) of a processor that is a physical device, and refers to a logical module designed based on at least one of application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, and other electrical units for performing a function.

For example, the data processing unit 330 may receive first information from the AC combiner 13 to which at least one AC module 11 including a PV panel and a microinverter is connected, perform control such that, based on the first information being received, information inducing user's input is output on the display of the user terminal 15, perform control such that, when an input corresponding to the information inducing user's input is received by the user terminal 15, transmission control information for controlling the microinverter of the AC module 11 to transmit second information to the AC combiner 13 is transmitted to the AC combiner 13, perform control such that the second information collected in the AC combiner 13 is transmitted to the cloud server 17, receive third information corresponding to the second information from the cloud server 17, and perform control such that the third information is output on the display.

The database 350 may store various types of information in conjunction with hardware such as a memory physically included in the user terminal 15, and when requested by the data processing unit 330, perform control such that the stored information is transmitted. In addition, the database 350 may store the first information, the second information, the third information, the information inducing user's input, and the connection information that are collected during the data processing unit 330 processes data.

When information to be output on the display 16 of the user terminal 15 is determined through a series of processes, the display control unit 370 performs a function of performing control such that the determined information is output. Here, it has already been described above that the determined information may be the third information.

Hereinafter, functions of the management app 300 in FIG. 2 will be described for each submodule of FIG. 3.

The communication unit 310 may receive first information from the AC combiner 13 to which at least one AC module 11 including a PV panel and a microinverter is connected.

The data processing unit 330 may perform control such that, based on the first information being received, information inducing user's input is output on the display 16 of the user terminal 15.

When an input corresponding to the information inducing user's input is received by the user terminal 15, the data processing unit 330 may control the communication unit 310 to transmit, to the AC combiner 13, transmission control information for controlling the microinverter of the AC module to transmit second information to the AC combiner 13. As another example of operation S450, the data processing unit 330 may control the communication unit 310 to transmit, to the AC module, transmission control information for controlling to transmit second information of the microinverter of the AC module to the user terminal 15, by communicating directly with the AC module without passing through the AC combiner 13.

The data processing unit 330 may perform control such that second information collected in the AC combiner 13 is transmitted to the cloud server 17.

The communication unit 310 may receive, from the cloud server 17, third information corresponding to the second information, and the display control unit 370 may perform control such that the third information is output on the display.

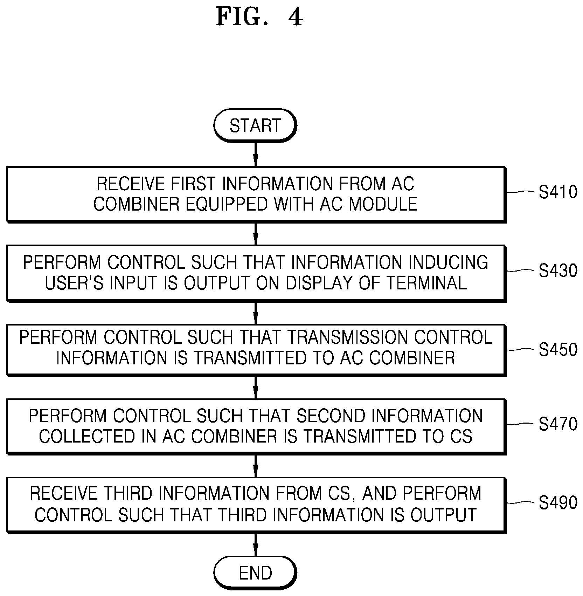

FIG. 4 is a flowchart of an example of a method according to the present disclosure.

The method of FIG. 4 may be implemented by the user terminal 15 and the management app 300 installed on the user terminal 15 described above with reference to FIGS. 2 and 3, and thus will be described with reference to FIGS. 2 and 3.

The communication unit 310 may receive first information from the AC combiner 13 to which at least one AC module 11 including a PV panel and a microinverter is connected (S410).

The data processing unit 330 may perform control such that, based on the first information being received, information inducing user's input is output on the display 16 of the user terminal 15 (S430).

When an input corresponding to the information inducing user's input is received by the user terminal 15, the data processing unit 330 may control the communication unit 310 to transmit, to the AC combiner 13, transmission control information for controlling the microinverter of the AC module to transmit second information to the AC combiner 13 (S450).

The data processing unit 330 may perform control such that second information collected in the AC combiner 13 is transmitted to the cloud server 17 (S470).

The communication unit 310 may receive, from the cloud server 17, third information corresponding to the second information, and the display control unit 370 may perform control such that the third information is output on the display (S490).

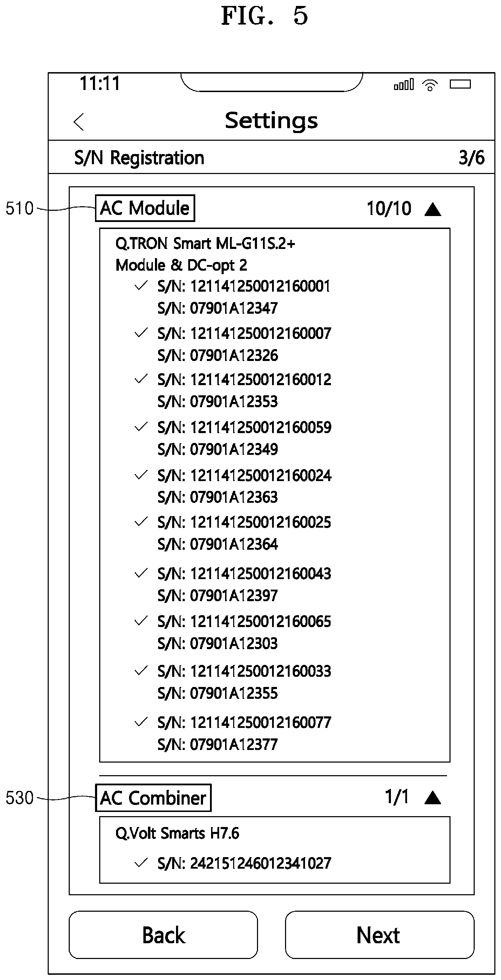

FIG. 5 is a diagram illustrating an example of information about an AC module that is output on a display of a user terminal when the present disclosure is applied.

Hereinafter, descriptions will be provided with reference to FIGS. 2 and 3.

Referring to FIG. 5, it may be seen that information about an AC module and an AC combiner is output through the display 16 of the user terminal 15. Identification information of a PV panel and a microinverter included in the AC module is displayed from the top to the middle of the display 16, and identification information of the AC combiner to which AC modules are connected is displayed at the bottom of the display 16. Hereinafter, for convenience of description, the pieces of information will be referred to as simply AC module information 510 and AC combiner information 530.

The AC module information 510 refers to information in which serial numbers of a total of 10 pairs of PV panels and microinverters are matched with each other. For example, the serial number of a first PV panel is 121141250012160001, and the serial number of a microinverter attached to the first PV panel is 07901A12347. According to the present disclosure, the serial numbers of the PV panels and the microinverters may be automatically matched with each other and then output on the user terminal, providing convenience, and human errors due to manual input by a user may be fundamentally prevented.

The AC combiner information 530 refers to identification information of the AC combiner 13, such as the serial number. According to an embodiment, the AC combiner information 530 may additionally include the manufacturer or model name of the AC combiner 13.

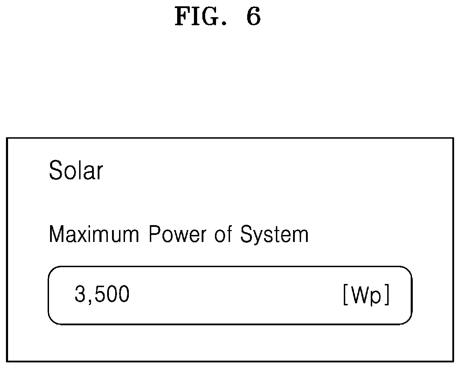

FIG. 6 is a diagram illustrating an example of total power production information of AC modules that is output on a display of a user terminal when the present disclosure is applied.

As described above, third information transmitted by the cloud server 17 to the user terminal 15 may include identification information of a microinverter, identification information of a PV panel, and power production information of the PV panel, and thus, the user may make a simple input to the user terminal 15 to check the expected maximum system power as a Watt peak value according to AC modules connected to the AC combiner 13. For example, referring to FIG. 6, it may be seen that the sum of power values that may be produced by AC modules connected to the AC combiner 13 is 3500 Wp.

The embodiments of the present disclosure described above may be implemented as a computer program that may be executed through various components on a computer, and such a computer program may be recorded in a computer-readable medium. In this case, the medium may include a magnetic medium, such as a hard disk, a floppy disk, or a magnetic tape, an optical recording medium, such as a compact disc read-only memory (CD-ROM) or a digital video disc (DVD), a magneto-optical medium, such as a floptical disk, and a hardware device specially configured to store and execute program instructions, such as ROM, random-access memory (RAM), or flash memory.

Meanwhile, the computer program may be specially designed and configured for the present disclosure or may be well-known to and usable by those skilled in the art of computer software. Examples of the computer program may include not only machine code, such as code made by a compiler, but also high-level language code that is executable by a computer by using an interpreter or the like.

Particular executions described herein are merely examples and do not limit the scope of the present disclosure in any way. For the sake of brevity, related-art electronics, control systems, software and other functional aspects of the systems may not be described in detail. Furthermore, line connections or connection members between elements depicted in the drawings represent functional connections and/or physical or circuit connections by way of example, and in actual applications, they may be replaced or embodied with various suitable additional functional connections, physical connections, or circuit connections. In addition, no item or component is essential to the practice of the present disclosure unless the item or component is specifically described as being "essential" or "critical".

The term 'the' and other demonstratives similar thereto in the specification of the present disclosure (especially in the following claims) should be understood to include a singular form and plural forms. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the operations of the methods described herein may be performed in any suitable order unless otherwise indicated herein or otherwise clearly contradicted by context. The present disclosure is not limited to the described order of the operations. The use of any and all examples, or exemplary language (e.g., 'and the like') provided herein, is intended merely to better illuminate the present disclosure and does not pose a limitation on the scope of the present disclosure unless otherwise claimed. Also, numerous modifications and adaptations will be readily apparent to those skilled in the art without departing from the spirit and scope of the present disclosure.

### Industrial Applicability

An embodiment of the present disclosure may be utilized in the manufacture of solar cells and their peripheral devices.

## Claims

1. A method of controlling transmission and reception of information of an alternating-current (AC) module comprising a photovoltaic (PV) panel, the method comprising:
receiving first information from an AC combiner to which at least one AC module comprising a PV panel and a microinverter is connected;
performing control such that, based on the first information being received, information inducing user's input is output on a display of a user terminal;
performing control such that, based on an input corresponding to the information inducing user's input output on the user terminal being received, transmission control information for controlling the microinverter of the AC module to transmit second information to the AC combiner, is transmitted to the AC combiner;
performing control such that the second information collected in the AC combiner is transmitted to a cloud server; and
receiving third information corresponding to the second information from the cloud server, and performing control such that the third information is output on the display.

2. The method of claim 1, wherein the first information is confirmation information generated when the AC module and the AC combiner are electrically connected to each other.

3. The method of claim 1, wherein the information inducing user's input is a smart button that is output through the display of the user terminal, and the input corresponding to the information inducing user's input is a touch input on the smart button.

4. The method of claim 1, wherein the second information is identification information of the microinverter.

5. The method of claim 1, wherein the third information comprises identification information of the microinverter, identification information of the PV panel, and power production information of the PV panel.

6. The method of claim 1, wherein the performing of the control such that the second information is transmitted to the cloud server comprises performing control such that, based on a preset number of the AC modules being connected to the AC combiner, and the second information being accumulated for each connected AC module, the accumulated second information is transmitted to the cloud server.

7. The method of claim 1, wherein the performing of the control such that the second information is transmitted to the cloud server comprises performing control such that the AC combiner checks the received second information at preset intervals, and collectively transmits, to the cloud server, the second information which has been checked.

8. The method of claim 1, wherein the performing of the control such that the second information is transmitted to the cloud server comprises performing control such that connection information for connecting to the cloud server is transmitted to the AC combiner based on information input to the user terminal.

9. A computer-readable recording medium having recorded thereon a program for executing the method of claim 1.

10. A system for controlling transmission and reception of information of an alternating-current (AC) module comprising a photovoltaic (PV) panel, the system comprising an AC combiner, a cloud server and a user terminal,
wherein the AC combiner is configured to generate first information based on detecting that at least one AC module comprising a PV panel and a microinverter is connected to the AC combiner, receive second information from the microinverter of the AC module through a control signal from the user terminal that has received the generated first information, and transmit the second information to the cloud server,
the cloud server is configured to generate third information corresponding to the second information and transmit the third information to the user terminal, and
the user terminal is configured to, in response to receiving the generated first information, generate the control signal and transmit the control signal to the AC combiner, and output, through a display, the generated third information from the cloud server.

11. The system of claim 10, wherein the first information is confirmation information generated when the AC module and the AC combiner are electrically connected to each other.

12. The system of claim 10, wherein the user terminal is further configured to perform control such that, based on the first information being received, information inducing user's input is output on the display of the user terminal,
the information inducing user's input is a smart button that is output through the display of the user terminal, and
the input corresponding to the information inducing user's input is a touch input on the smart button.

13. The system of claim 10, wherein the second information is identification information of the microinverter.

14. The system of claim 10, wherein the third information comprises identification information of the microinverter, identification information of the PV panel, and power consumption information of the PV panel.

15. The system of claim 10, wherein the user terminal is further configured to perform control such that, based on a preset number of the AC modules being connected to the AC combiner, and the second information being accumulated for each connected AC module, the accumulated second information is transmitted to the cloud server.

16. The system of claim 10, wherein the user terminal is further configured to perform control such that the AC combiner checks the received second information at preset intervals, and collectively transmits, to the cloud server, the second information which has been checked.

17. The system of claim 10, wherein the user terminal is further configured to perform control such that connection information for connecting to the cloud server is transmitted to the AC combiner based on information input to the user terminal.
